# EUROPEAN PATENT SPECIFICATION

(11) **EP 1 485 307 B1**
(45) Date of publication and mention of the grant of the patent: **07.03.2007**
(21) Application number: 03733838.1
(22) Date of filing: 18.03.2003
(51) Int. Cl.: B65D 81/34, A23L 1/18, A23L 1/164

(54) **FLAVOURED POPCORN PRODUCT**
AROMATISIERTES POPCORN-PRODUKT
PRODUIT A BASE DE MAIS A ECLATER AROMATISE

(30) Priority: 18.03.2002 US 365433 P
(43) Date of publication of application: 15.12.2004
(73) Proprietor: Conagra Foods, Inc., Edina, MN 55439 (US)
(72) Inventor: JENSEN, Michael, Laurence, Spring Lake Park, MN 55432 (US); OHMAN, Nancy, Nelson, Inver Grove Heights, MN 55077 (US); CHRISTENSEN, Deborah, L., Maple Grove, MN 55369 (US); SCHILMOELLER, Lance, Bernard, Minnetonka, MN 55305 (US)
(74) Representative: Pawlyn, Anthony Neil
(86) International application number: PCT/US2003/008203
(87) International publication number: WO 2003/080465

(56) References cited:
- EP-A- 1 183 953
- WO-A-02/067694
- US-A- 3 704 133
- US-A- 3 851 574
- US-A- 4 767 635
- US-A- 5 008 024
- US-A- 5 443 858
- US-A- 5 753 287

## Description

### FIELD

The present disclosure relates to microwave popcorn. The disclosure particularly relates to methods and compositions for flavoring microwave popcorn.

### BACKGROUND

Microwaveable popcorn (sometimes referred to as microwave popcorn) is a popular consumer item. A package of microwaveable popcorn, as obtained by the consumer, includes a disposable package having a charge of unpopped popcorn composition enclosed therein. This popcorn composition generally includes unpopped popcorn kernels, in many instances oil or fat, and any flavoring. In many instances, a microwave susceptor (microwave interactive construction) is provided on or within the package to facilitate collection of microwave energy and heat transfer to the popcorn composition during popping. The package, having the unpopped popcorn therein, is placed inside a microwave oven and after exposure to microwave energy for about 1-5 minutes, typically about 95% of the popcorn pops, producing the edible form known by the consumer.

Many consumers prefer that their microwave popcorn be flavored. One typical way to provide a flavor is to include appropriate flavoring materials within the popcorn composition before popping, so that, as popped, the microwave popcorn is provided with the desired taste, without the need to add a post-pop flavoring step. For example, a salty taste can be provided by including appropriate levels of a salt, typically sodium chloride (NaCl), in the microwave popcorn composition. Butter flavor is another common and popular flavor. Some consumers enjoy a sweet flavor to their microwave popcorn. One method of providing a sweet flavor in the microwave popcorn is to include a sweetener within the popcorn composition prior to popping. There are also consumers that enjoy the combination of the two flavors, for example, a sweet and salty taste.

The following microwave products, available from ConAgra Foods, Inc., are examples of commercially available products that are flavored: "Act II Natural Microwave" and "Act II Butter Microwave Popcorn". The salted taste is a result of including sodium chloride to the composition contained within the package prior to popping. The butter taste is a result of including butter flavoring to the composition. "Act II Cinema Sweet " and "Act II Kettle Corn microwave popcorn" are sweet, and a sweet and salty product, respectively, both of which are from ConAgra Foods and incorporate an artificial sweetener, and optionally salt, in the popcorn composition prior to popping.

Various patents have described different ways to flavor microwave popcorn. For example, U.S. Pat. No. 3,704,133 describes a salt flavoring mixed with an oil/fat material and the popcorn. When the package is placed in a microwave oven, the popcorn pops in the presence of the oil/fat, which becomes distributed over the popcorn. Another method for flavoring popcorn is described in U.S. Pat. No. 3,851,574, in which a film former is used in conjunction with an oil/fat to coat previously popped popcorn with a flavoring material. Along this same line, U.S. Pat. No. 4,767,635 teaches coating unpopped kernels with a film or coating having some flavoring material retained therein. According to the reference, during a popping process, some of the flavoring is retained by a portion of the film on residual hulls of the kernels.

Improvements in flavoring of microwave popcorn are desired.

### SUMMARY

In general, the present disclosure is directed to methods of preparing flavored microwave popcorn products and the products made therefrom. In one embodiment, an unpopped popcorn composition is provided that has unpopped popcorn kernels, first flavorant that is fixed on the surface of the kernels, and second flavorant. The first and second flavorants may be the same flavorant or a different flavorant. If the flavorants are different, the two flavorants are preferably selected to complement one another. Examples of complementary flavors are garlic and butter, sour cream and chives, apple-cinnamon, caramel and apple, cheese and pepperoni, and dill and pickle. Each of the flavorants includes primary flavor components, which are the components that provide the main flavors to the popped popcorn product, and may include secondary components, which generally are not intended as a flavor source.

When the popcorn composition is exposed to microwave energy and popped, the resulting popped product has popped flakes having the second flavorant present on the outer portions of the popped flakes and the first flavorant present in the interior portions of the popped flakes, primarily on the remnant kernel hull. These varied locations of the two flavorants provide a product having two flavors which the taste buds sense with different taste impact during the eating process.

Also according to the present disclosure, an unpopped popcorn product is provided. The product includes flavored unpopped, popcorn composition in a container having a microwave susceptor. The container may be, for example, a flexible paper bag, such as a two-ply bag, having a microwave interactive construction mounted on or in the bag. Alternatively, the package may be a fiberboard tub, having a microwave susceptor positioned on or inside the tub.

After popping by the consumer, a flavored popcorn product is obtained.

### BRIEF DESCRIPTION OF THE DRAWINGS

Figure 1 is partial, cross-sectional view of a schematic view of a first embodiment of a popcorn product having a package construction a microwave popcorn composition of the present disclosure retained therein.
Figure 2 is a partial, cross-sectional view of a schematic view of a second embodiment of a popcorn product having a package construction with a microwave popcorn composition of the present disclosure retained therein.
Figure 3 is a front perspective view of an arrangement incorporating a microwave popcorn composition, such as the arrangement of Figure 1, depicted closed in a storage overwrap and oriented standing on an edge.
Figure 4 is a schematic top plan view of the arrangement according to Figure 3, depicted unwrapped and unfolded, as it would be when positioned in a microwave oven for cooking.
Figure 5 is a front perspective view generally analogous to Figure 3, with portions broken away to show internal detail and without the overwrap.
Figure 6 is a cross-sectional view taken generally along line 4-4, Figure 4.
Figure 7 is a schematic, plan view of a package blank showing an adhesive pattern useable to generate a bag useable in the arrangement of Figures 3-6.
Figure 8 is a schematic cross-sectional view of a fiberboard tub including a microwave popcorn composition according to the present disclosure.

### DETAILED DESCRIPTION

As indicated above, the principles disclosed herein concern the preparation of a flavored popcorn composition that includes: unpopped, popcorn kernels; optionally and preferably, a distribution component; and at least two flavorants, in the form of a first flavorant fixed on the surface of the kernels, and a second flavorant not fixed to the surface of the kernels.

### Unpopped Popcorn Products

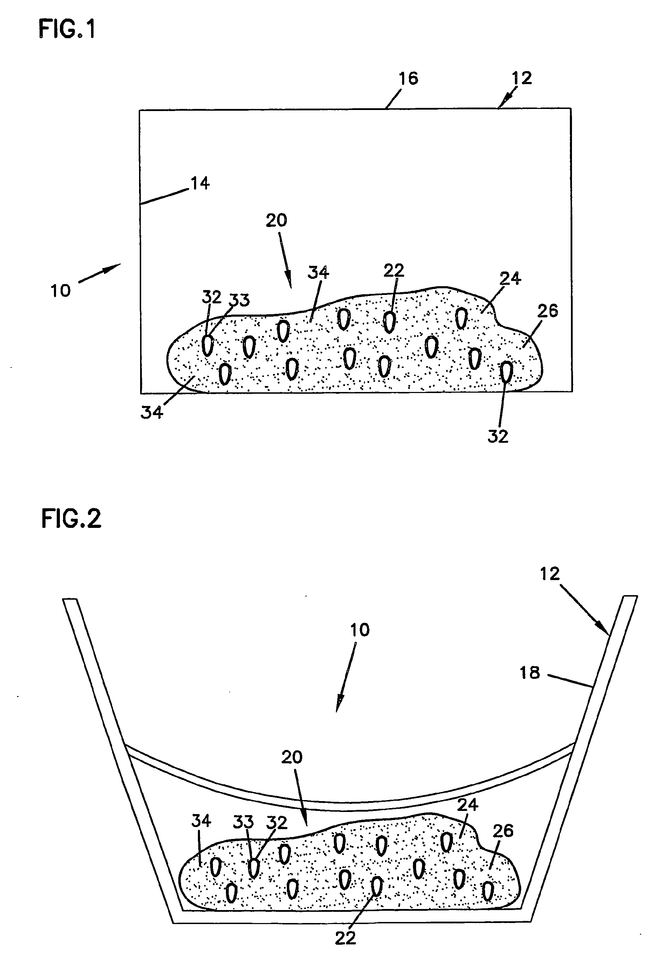

Typical consumer popcorn products according to the present disclosure are illustrated in Figures 1 and 2. In general, a typical consumer product includes a package containing a microwaveable popcorn composition, which the consumer can place in a microwave oven and, through exposure to microwave energy, pop. The flavor is present in the composition and would be provided on the popcorn without further operation by the consumer. That is, the consumer need only to open the package to consume the flavored popcorn. The package need not be shaken to distribute flavor, and the flavor will generally be well adhered to the hulls and/or flakes of the popped popcorn. It is noted that some consumers are in the habit of shaking the package after popping, although generally this is not needed.

Figure 1 shows a popcorn product 10, which includes package 12 having an interior volume 14 in which a flavored popcorn composition 20 according to the present disclosure is retained. Flavored popcorn composition 20 has a first flavorant and a second flavorant. Composition 20 has a plurality of unpopped popcorn kernels 22 and a distribution component 24. In the particular embodiment shown, distribution component 24 is an oil/fat distribution component 26. Although the term "oil/fat" is used, the oil/fat component may be entirely oil, may be entirely fat, or a combination of the two. Generally, an "oil" component is liquid at room temperature and a "fat" component is solid at room temperature.

Unpopped popcorn kernels 22 have a first flavorant 32 fixed thereon. First flavorant 32 is adhered or otherwise fixed to the surface of kernels 22 by a coating composition 33, which retains first flavorant 32 onto kernels 22. Distribution component 24 has a second flavorant 34 present therein. In this instance, distribution component 24 is an oil/fat distribution component 26.

In Figure 1, package 12 is specifically a bag construction 16. Bag constructions for microwave popcorn products are well known. These bag constructions include a microwave interactive susceptor, which is typically a metallized material, for the consolidation and direction of heat toward the popcorn composition retained within the bag. Examples of suitable bag constructions 16 for microwave popcorn include those described in U.S. Patent Nos. 4,450,180; 4,548,826; 4,691,374; 5,044,777, and 5,753,895. Additional details regarding bag constructions are provided below.

In Figure 2, package 12, specifically a tub construction 18, has popcorn composition 20 contained therein. Tub constructions are a second type of package in which microwave popcorn compositions are packaged. Tub constructions are typically formed from paperboard or other semi-rigid material. Examples of suitable tubs 18 for microwave popcorn include those described in U.S. Patent Nos. 5,008,024; 5,097,107, and 5,834,046. Additional details regarding tub constructions are provided below. Popcorn composition 20 is the same as that described above, having first flavorant 32 fixed on kernels 22 via coating composition 33 and second flavorant 34 within distribution component 24.

After popping of composition 20 with microwave energy, the flavored popcorn composition 20 provides a flavored, popped popcorn product. The two flavorants, present as a fixed flavorant and non-fixed flavorant when in the form of the unpopped composition, provide a popped product having flavor or flavoring present at two locations. The two flavorants provide different impact when the popcorn is consumed.

When a popcorn kernel pops, it basically inverts; that is, the hull, which was the external surface of the kernel prior to being popped, is positioned close to, if not at, the center of the popped flake, and the starch-based corn, which was within the hull of the unpopped kernel, explodes out from the center and is present as the material around the hull. This starch-based, popped corn is generally referred to as a popped flake.

Because of the inversion of the kernel during popping, the resulting popped popcorn has the first fixed flavorant (which was present on the kernel hull prior to popping) generally present within an interior portion of the popped corn, inside or within the flakes of exploded corn, and the second flavorant is generally present on the outer or exterior portion of the flakes. It is understood that some amount of the second flavorant may be present close to the hull remnant, the flakes being oddly shaped and with a large surface area. By having the two flavorants initially in different portions of the unpopped composition and then in generally different portions of the popped flake, the flavors generally do not intimately mix, but, at least in part, retain their individuality.

The two flavorants, typically located at different physical positions on the popped flake, provide a different taste impact on the eater. For some popcorn products, the taste buds sense the two flavorants at different times. For example, generally, the second flavorant, which was not fixed on the kernel, is tasted first, the flavorant having been distributed on the exterior of the popped flake by the distribution component. The first flavorant, which was fixed on the exterior of the unpopped kernel, is usually tasted second or slightly delayed from the tasting of the second flavorant.

The term "fixed", when referring to the flavorant, refers to the flavorant that is, or is intended to be, retained on unpopped popcorn kernels. A substantial portion (at least 25%, preferably at least 75%) of the flavorant originally provided on (e.g., adhered to or otherwise fixed on) the kernel is retained on the kernel; that is, it does not fall off or become lost in packaging, during shipping or during popping. After popping, the fixed flavorant, at least in part, remains on the remnant of the kernel hull. The term "not fixed" or "non-fixed", and variations thereof, when referring to the flavorant, refers to flavorant that is not fixed to or had not been not fixed or attempted to be fixed to the kernels. Fixed flavorant that falls off or otherwise becomes unfixed from the kernel is not considered within the definition of non-fixed flavorant. A non-fixed flavorant is that which was not intended to be fixed. Non-fixed flavorant can be present, for example, as a loose material with respect to the kernels, can be present in a carrier liquid or a carrier solid, or retained separately.

As stated above, the popcorn composition includes unpopped popcorn kernels onto which first flavorant is adhered or otherwise fixed. This fixed flavorant will provide, in the eventual popped popcorn product, a flavorant present on or near the exploded hull remnant. The popcorn composition further includes second flavorant which is not fixed. This non-fixed flavorant will provide, in the eventual popped popcorn product, a flavorant present on an exterior surface, at least, of the popped popcorn flake.

### Flavorants

By use of the term "flavorant", what is intended is a flavor additive or multiple flavor additives that modify the flavor of the composition compared to if the flavorant was not present. That is, the flavorant adds an effective amount of flavor that is discernable to the consumer (that is, the eater) of the popped product. Typically, non-flavorant materials in the adhesive composition (described below), the coating composition (described below), or the distribution component (also described below) do not provide an effective amount of flavor and are not included in the definition of a flavorant.

The term "non-salt flavorant" is intended to encompass flavorants other than ordinary salts used for foods, which include sodium chloride (NaCl), potassium chloride, and monosodium glutamate. The term "non-NaCl flavorant" is intended to encompass flavorant other than sodium chloride (NaCl). It is realized that flavorants may include a non-salt component and a salt component within the same flavorant material. For this disclosure, the terms "non-NaCl", "non-salt flavorant" and variations thereof, are intended to not include the component of the flavorant that is salt (e.g., sodium chloride, potassium chloride, monosodium glutamate); rather, only the portion of the flavorant that is non-salt or non-NaCl is included in the term "non-salt flavorant" or "non-NaCl flavorant".

The flavorant, whether fixed or non-fixed, has a primary flavor component that is the primary or major flavor or impact (taste) or seasoning of the flavorant. The primary flavor component is the material that provides the taste impact when consuming the popped product; when two flavorants are used, the primary flavor components provide the different taste impacts. For example, a honey-roasted peanut flavored popcorn product may have a nut flavor as the fixed flavorant and honey as the non-fixed flavorant. Included in the nut flavored, fixed flavorant is a peanut flavor, which would be the primary flavor component of the fixed flavorant. Either or both the fixed flavorant and non-fixed flavorant can include flavors or flavorings that are not included in the primary flavor component; that is, the flavorant can include secondary flavors or flavorings that complement, highlight, or otherwise affect the overall flavor from the flavorant. Referring to the honey-roasted peanut example, the non-fixed flavorant may include butter flavor in addition to the honey primary flavor component.

Examples of flavors suitable as non-salt or non-NaCl flavorants, either the fixed flavorant or the non-fixed flavorant, include, but are not limited to, butter, sugar or sweet (such as chocolate, chocolate mint, mint, chocolate banana, honey, vanilla, pineapple, coconut, and peppermint), cheese (such as cheddar cheese, mild cheddar, white cheddar, blue cheese, mozzarella, parmesan), pizza, salsa, barbeque, smoke, hickory, applewood or mesquite, dry roast, buffalo wing, fruit flavors (such as apple, cherry, berry, orange, banana, pineapple), vegetable flavors (such as tomato, onion, jalapeno, habaneros), pickle, spices (such as garlic, onion, chives, parsley, general herb, mustard, pepper, cinnamon), sour cream, sweet cream, honey mustard, hot mustard, and vinegar. Flavorants that provide sour flavors, spicy or hot flavors, can also be used. A wide variety of other flavors or flavor enhancers can be used and would be included as a flavorant. For example, peanut flavors, yeast extracts, or similar materials are usable.

In addition to using real butter, butter flavor or flavoring can be provided via artificial butter flavorants. Preferred ones are Encapsulated Starter Distillate-50x, Natural Butter Flavor NF 6258 Dry, and Butter Flavor, NF5048 (all of which are available from Chris Hansen's Laboratories, Inc., Milwaukee, WI). Although each of these provides a butter flavor or flavoring, within this application it is considered that each of these materials is a different flavorant.

Cheese flavors can be accomplished with commercial cheese flavorants such as flavors #308342, #308962 and #304558 from Givaudan Flavors Corp. of Cincinnati, OH, again, each of these being considered a different flavorant.

Flavorants that provide sweetened or sweet flavored popcorn flakes include the following artificial flavors: "Splenda" sucralose, from McNeil Specialties; "Sunett" acesulfane potassium, from Hoechst Celanese, Edison, NJ, "Aspartame 200", from Sanofi Bio-Industries, Fairfield, NJ. Sucrose (sugar), fructose, glucose, maltodextrin, corn syrup solids, and other sweetening materials may also be used. Sucralose is a preferred sweetening agent for compositions where salt (sodium chloride) is also present. Sucralose has been determined to inhibit the amount of bum realized when exposing salt and a sweetening agent to microwave energy. For additional information regarding compositions with salt and sucralose, see pending U.S. patent applications having publication numbers US 2002-0127306 and US 2003-0012853.

Any of these flavorants can be used as a solid material (such as a dry powder or a bead) or a liquid material (such as an oil or a solution). Liquid flavorants may be present as oils, as oil or aqueous solutions or dispersions, or the like.

Fine powdered flavorants are preferred in order to obtain relatively even distribution of the flavorant over the kernels. In most embodiments, the solid material is preferably smaller in particle size than a 30 U.S. Standard Mesh. In further embodiments, the solid material is preferably larger in particle size than a 280 U.S. Standard Mesh. Particles sizes of smaller than 50 U.S. Standard Mesh are suitable, as are sizes greater than 240 U.S. Standard Mesh. In general, spray dried and dry encapsulated flavors are preferred.

Examples of solid or dry flavorants having encapsulated flavors are those available under the trade name "Flavorburst" flavors, from Givaudan. These flavorants incorporate the flavors in a protein shell, protecting sensitive components from loss or degradation during processing (such as heating) or interaction with other food ingredients (such as oil). Release of the full flavor profile is delivered by the shearing action of chewing the final, popped popcorn product.

The "Flavorburst" products are also available in a liquid form. If desired, any liquid flavorants can be supported on a powdered base such as maltodextrin or cornstarch in order to provide a dry flavorant. Conversely, dry flavorants can be dissolved or otherwise mixed with a liquid to provide liquid flavorants.

Examples of solid or dry flavorants that are present as a particle including an adhesive or starch carrier includes those available from National Starch Co. under trade designations "National 46", "National N-LOK" and "National Capsul". These powdered flavorants contain approximately 55% flavorant.

Various examples for combinations to be used as fixed flavorant and non-fixed flavorant in popcorn compositions in accordance with the present invention (although not limited to fixed and non-fixed, respectively, as listed) include, but is definitely not limited to, apple and cinnamon; apple and caramel; berry and sweet cream; butter and garlic; cheese and tomato; pizza and pepperoni; cotton candy and bubble gum; chocolate and mint; peanut butter and jelly; chocolate and cherry; and any other combinations.

Singular flavors, that can be provided by a fixed flavorant and a non-fixed flavorant, include: butter, cheese, cotton candy; chocolate; mint; and so on.

### Coating Composition

The first flavorant is fixed to the surface of the unpopped popcorn kernels. Typically, the first flavorant is fixed to the kernels with a coating composition, such as an adhesive composition. The flavorant may be present throughout the coating composition or may be present on the exterior portion of the coating composition. The flavorant may be present in the coating composition prior to coating on the kernel, or the flavorant may be added onto the coating composition after coating on the kernel.

The coating composition is preferably a liquid composition, typically an aqueous composition. The composition may be any of a solution, a suspension, a gel, a sol, or other liquid, typically, aqueous, composition. The coating composition itself is not a flavorant, although the coating composition may be a carrier for the flavorant. For example, solid (particulate) or liquid flavorant may be added to the coating composition. The flavorant may disperse or dissolve in the coating composition.

A variety of food-grade adhesives or tacking agents may be used for the coating or adhesive composition. Suitable materials include bacterial polysaccharide gums such as gellan gum, xanthan gum, gum arabic, and cellulose gum or mixtures thereof. By "bacterial" in this context, it is meant that the gum comprises a product of a microorganism's operation on a fermentation medium. For example, gellan gum is produced by the microorganism *Pseudomonas elodea* (ATCC 31461). Xanthan gum comprises the fermentation product of *Xanthomonas campestris.* Gum arabic, also known as Gum acacia, is the dried gummy exudate from stems and branches of *Acacia Senegal* (Linne), Willdenow or other related African species of acacia. A useable cellulose gum is sodium carboxymethyl cellulose.

A preferred gum is gellan gum. Gellan gum is available under the mark Kelcogel F, from the Nutrasweet Kelco Co., San Diego, CA. TIC Gums No-Fat Snack Blend, available from TIC Gums, Inc. of Belcom, MD, is another suitable gum for use in the flavored popcorn compositions. TIC Gums No Fat Snack Blend is a blend of maltodextrin, corn syrup solids, gum acacia, and cellulose gum.

Food grade starches are also a suitable adhesive composition. Starches, in a pregelatinized or non-pregelatinized form, hydrate in water and have good film-forming properties. Examples of suitable starches include instant starch B792, cooked starch B790, and maltodextrin M180, all from Grain Processing Corp. of Muscatine, IA.

It is preferred that the tacking agents or adhesives used in the coating composition are compatible with water. By the term "compatible with water", it is meant that the adhesive or tacking agent may be soluble in water, may be miscible with water, or that water hydrates the adhesive or tacking agent.

Preferably, the coating composition contains about 0.05-10 wt-% adhesive or tacking agent, the remainder preferably being water. Adjuvants such as processing aids, salt or other flavorants, or color may be added, typically in amounts less than about 5 wt-% of the total composition. In some instances, particularly with liquid flavorants, it may be preferable to add the flavorant to the adhesive composition. If this is done, the level of adhesive or tacking agent will be about 0.05 to 10 wt-% and the flavorant will be about 1 to 10 wt-% of the total adhesive composition. In some other instances, the material or particle providing flavorant may include an adhesive or tacking agent. That is, one particle may include both flavorant and adhesive or tacking agent. One example of such a flavored particle is Givaudan cheese flavor #583218, which is a powdered material, each particle comprising approximately 55% flavorant and 45% adhesive. Other Givaudan flavors that combine flavorant and adhesive include #563259 (another cheese flavor) and #548112 (bacon flavor).

Examples of commercially available, gums and starches suitable as an adhesive or tacking agent include the following:
Kelcogel F, from the Nutrasweet Kelco Co., San Diego, CA;
TIC Gums No-Fat Snack Blend, from TIC Gums, Inc., Belcom, MD;
Gum Arabic, NF Premium, spray dried Type A-180, from Gumix International, Fort Lee, NJ;
Keltrol GM, Xanthan gum, from Kelco Division of Merck & Co., Inc., San Diego, CA;
Methocel (A4MP or K4MP) Cellulose Gum, from Dow Chemical, Midland, MI;
Maltrin 100, Maltodextrin, from Grain Processing Corp., Muscatine, IA; and Instant starch B792, from Grain Processing Corp.

Preferably the coating composition is applied to the unpopped popcorn kernels in a manner that ensures relatively even and thorough coating. A variety of application techniques may be used, for example, spraying, ladling, immersion, etc., which can be done as a batch process or a continuous process.

The coating composition is present on the surface of the unpopped popcorn kernels at a level to provide a good coverage of the coating and adhered flavorant over the kernels. In the case of unpopped kernels, the adhesive composition is applied so that when dry, typically no more than 5%, generally no more than 2%, of dry adhesive (such as gum, starch, etc.) is present, by weight of popcorn. In many instances, the amount of dry adhesive is about 0.1 to 2 wt-%, typically about 0.5-1.5 wt-% of the popcorn kernels.

The first flavorant, if not already present in the coating composition when applied onto the kernels, can be applied to the adhesive coated kernels. Preferably, dry flavorant is applied to the kernels, such as by sifting, before the surfaces of the kernels are completely dried. A dry flavorant can be added in addition to a flavorant having been added to the coating composition.

Other adjuvants may be included and applied (e.g., sifted) onto the kernels. For example, calcium chloride, which bonds upon contact with gellan gum, may be used to improve strength and speed of bonding of the components of the gum.

One adjuvant found useful in connection with the present disclosure, for addition to unpopped kernels, is silicon dioxide (SiO₂). In general, the presence of silicon dioxide may help keep kernels from adhering to one another and may improve further processing of the kernels. If used, preferably, silicon dioxide is added after the kernels are flavor-coated and dried to the desired moisture content. The powdered silicon dioxide is typically poured or sifted on to the coated kernels and the kernels are tumbled to distribute the silicon dioxide evenly. One suitable silicon dioxide is fumed silicon dioxide (or, fumed silica) known under the trade name CAB-O-SIL from Cabot Corp., Tuscola, IL. Another suitable adjuvant to prevent kernels from adhering to one another is a modified food starch, for example, DRY-FLO, available from National Starch and Chemical Co., Bridgewater, NJ.

After the application of flavorants onto the kernel surface, a drying process of the coated kernels should be initiated, preferably immediately, and by hot air drying. Air temperatures from the heat sources used for the air drying will typically be within the range of about 150-230°F (65-110°C). Relatively higher temperatures are generally preferred, so that the moisture is driven off as quickly as possible to maintain the final product quality. Examples of suitable drying techniques include using a fluid bed dryer, in which the wet, flavored kernels are placed on a screen mesh belt and hot air flow around the kernels, a "Vector" drum, in which the coated kernels are rotated in a drum and hot air is blown into the drum to dry the kernels, and a vibratory fluid bed drier, such as available from Carman Industries of Jeffersonville, IN.

In addition, to have desirable handling characteristics, it is preferred that the unpopped kernels be provided in a form such that they do not stick to one another during the processing, and so that they can be processed and handled without individual kernels knocking off substantial amounts of flavorant or coating, by bumping into one another. Factors of some significance with respect to this include: the fineness of the flavorant applied to the kernels; the nature of the adhesive or tacking agent; and the amount of adhesive and flavorant applied per weight of kernel. In general, it has been observed that the coated kernels, of preferred products, comprise at least about 1 wt-% flavored coating, and of alternate preferred product, comprise no more than about 20 wt-% flavored coating. More preferred products comprises about 1.5-15 wt-% flavored coating, with respect to the unpopped kernels, and most preferred products comprise about 2-10 wt-%.

### Distribution Component

As stated above, the second flavorant is a non-fixed flavorant, and is not fixed to the kernels but generally is loose within the unpopped popcorn composition. This non-fixed flavorant is present within the unpopped popcorn composition so that upon popping, and probably during popping, the second flavorant is distributed over the popped flakes.

The popcorn composition includes an oil/fat distribution component to facilitate the distribution of the non-fixed flavorant over the flakes. The distribution component may facilitate the distribution of the flavorant by splashing, pouring, spraying, blowing or otherwise distributing the flavorant over the flakes. The distribution component could be either a liquid or solid prior to the popping process. Typically, the distribution component is a liquid during the popping process.

The amount of distribution component, in relation to the entire unpopped popcorn composition, is no more than about 50 wt-%, and is typically no more than about 40 wt-%. The amount of distribution component is usually at least 1 wt-%.

The non-fixed flavorant is in contact with, and typically mixed within and throughout, the distribution component. The amount of non-fixed flavorant within the distribution component is generally at least 0.5 wt-% of the distribution component and is generally not more than 25 wt-% of the distribution component, but this will depend on the amount of distribution component present. That is, a distribution component that is present at a lower level will typically have a larger percentage of non-fixed flavorant therein, in relation to the amount of distribution component, than a larger amount of distribution component. Typical levels of flavorant in the distribution component are at least 1 wt-% and no more than about 15 wt-%, however, as stated, this will depend on the amount of distribution component, and also on the type of flavorant(s) employed.

The distribution component is an oil/fat component, sometimes referred to as an oil component or as a fat component. The oil/fat component may be entirely oil, may be entirely fat, or a combination of the two. Generally, an "oil" component is liquid at room temperature and a "fat" component is solid at room temperature. Many forms of oil/fat component are substantially solid at room temperature and readily melt during the microwave popcorn popping process. Among other things, a function of the oil/fat component is to rapidly melt during the microwave popcorn process to provide an even distribution of heat, and to distribute, (e.g., splash) flavorant over the flakes.

The oil/fat component typically substantially comprises an oil or oil/fat having a melting point below 120°F (49°C), and, preferably below 115°F (46°C). For example, the oil component can be formulated with an oil having a melting point of about 111°F (44°C) or less. Typical preferred oil components used will be ones having a melting point within the range of 95°-111°F (35°C-44°C). Of course, the composition could be formulated with oil components that have a higher melting point, for example, on the order of 115°-120°F (46°C-49°C).

Preferred liquid oils for use in the oil/fat component are partially hydrogenated vegetable oils. Suitable oils include sunflower oil, safflower oil, rapeseed oil, cottonseed oil, maize oil or corn oil, linseed oil, groundnut oil, and soybean oil. Other suitable oils include nut oils (such as almond, brazil nut, cashew, coconut, hazelnut, pecan, peanut, and walnut), olive oil, palm oil, sesame oil, and flaxseed oil. A particularly preferred oil comprises at least 50 wt-%, and preferably at least 90 wt-%, partially hydrogenated soybean oil having a melting point of 100°-111°F (37°-44°C). Most preferably at least 99 wt-%, of the oil in the oil component is partially hydrogenated soybean oil having a melting point within the range of 100°-111°F (37°-44°C).

The amount of oil in the oil/fat component is at least 70 wt-%, and typically at least 75 wt-%. A preferred level of oil in the oil/fat component is about 80 wt-% to 95 wt-%.

One common level of oil/fat distribution component, in respect to the popcorn composition, is at least 25 wt-% and no greater than about 50 wt-%, typically no greater than 40 wt-%. A preferred level is about 25-35 wt-%. Popcorn compositions having these levels of oil/fat distribution component are referred to as "traditional" popcorn compositions, based on "traditional" levels of oil/fat. Another common level of oil/fat distribution component, in respect to the popcorn composition, is no greater than about 20 wt-%, typically no greater than 15 wt-%. A preferred level is about 10-13 wt-%. Popcorn compositions having these levels of oil/fat distribution component are referred to as "low fat" or "light fat" popcorn compositions, based on "low" or "light" levels of oil/fat. Yet another common level of oil/fat distribution component, in respect to the popcorn composition, is no greater than about 8 wt-%, typically no greater than 5 wt-%. A preferred level is about 1.5-4 wt-%. Popcorn compositions having these levels of oil/fat distribution component are referred to as "ultra low fat" popcorn compositions, based on "ultra low" levels of oil/fat.

Typical levels of distribution component, with respect to the unpopped popcorn kernels, is no more than about 80 wt-%, and is typically no more than about 60 wt-%. One common level of distribution component, with respect to the unpopped popcorn kernels, is about 40-50 wt-%. Some popcorn compositions, such as the "low fat" or "light fat" products, may have an amount of distribution component greater than about 1 wt-% and less than about 20 wt-%. Common levels of distribution component are about 7-14 wt-%, and about 1.5-4 wt-% of the total popcorn composition.

It should be noted that in some embodiments, the non-fixed flavorant is a liquid, such as an oil-based flavor. Liquid non-fixed flavorants are not considered a distribution component. Liquid non-fixed flavorants will generally be less than about 2 wt-% of the composition, and typically less than 1 wt-%.

The following tables provide typical and preferred levels for various popcorn compositions according to the present disclosure (that is, the total weight of edible components of the popcorn composition). Table I provides levels for traditional fat-containing popcorn compositions, and Table II provides levels for low-fat popcorn compositions. The following levels are based on total weight of unpopped popcorn composition, including popcorn, coating composition, fixed flavorants (including non-NaCl flavorants and salt), any distribution component, and non-fixed flavorants (including non-NaCl flavorants and salt), i.e., the food components.

**Table I**

| **Ingredient** | **Suitable** | **Typical** |
|---|---|---|
| | **Wt-%** | **Wt-%** |
| Unpopped | ≥50 wt-%; | ≥55 wt-%; |
| Popcorn | ≤80 wt-% | ≤75 wt-%; |
| | | more typically ≥60 wt-% |
| Non-NaCl Fixed | ≥0.5 wt-%; | ≥1 wt-%; |
| Flavorant | ≤15 wt-% | ≤10 wt-%; |
| | | more typically 1-10 wt-% |
| Total Fixed | ≥0.5 wt-%; | ≥1 wt-%; |
| Flavorant¹ | ≤15 wt-% | ≤10 wt-%; |
| | | more typically 1-10 wt-% |
| Non-NaCl | ≥0.2 wt-%; | ≥0.5 wt-%; |
| Non-Fixed | ≤15 wt-% | ≤10 wt-%; |
| Flavorant³ | | more typically 1-7 wt-% |
| Total Non-Fixed | ≥0.2 wt-%; | ≥0.5 wt-%; |
| Flavorant^{2,3} | ≤15 wt-%; | ≤10 wt-%; |
| | | more typically 1-10 wt-% |
| Oil/Fat | ≥25 wt-%; | 25-35 wt-% |
| Distribution | ≤50 wt-%, | more typically |
| Component | typically ≤40 wt-% | 27-33 wt-% |
| Salt (NaCl) | | ≤2 wt-% |

**Table II**

| **Ingredient** | **Suitable** | **Typical** |
|---|---|---|
| | **Wt-%** | **Wt-%** |
| Unpopped Popcorn | ≥80 wt-% | ≥85 wt-% |
| Non-NaCl Fixed | ≥0.5 wt-%; | ≥1 wt-%; |
| Flavorant | ≤15 wt-% | ≤10 wt-%; |
| | | more typically 1-10 wt-% |
| Total Fixed | ≥0.5 wt-%; | ≥1 wt-%; |
| Flavorant¹ | ≤15 wt-% | ≤10 wt-%; |
| | | more typically 1-10 wt-% |
| Non-NaCl Non- | ≥0.2 wt-%; | ≥0.5 wt-%; |
| Fixed Flavorant³ | ≤15 wt-% | ≤10 wt-%; |
| | | more typically 1-7 wt-% |
| Total Non-Fixed | ≥0.2 wt-%; | ≥0.5 wt-%; |
| Flavorant^{2,3} | ≤15 wt-%; | ≤10 wt-%; |
| | | more typically 1-10 wt-% |
| Oil/Fat Distribution | ≥1 wt-%; | 10-13 wt-% |
| Component | ≤20 wt-%, | more typically |
| | typically ≥1.5 wt-%; | 10-12 wt-% |
| | typically ≤15 wt-% | |
| Salt (NaCl) | | ≤2 wt-% |

| | | |
|---|---|---|
| 1 Total Fixed Flavorant includes the non-NaCl fixed flavorant and fixed salt. 2 Total Non-Fixed Flavorant includes the non-NaCl non-fixed flavorant and non-fixed salt. 3 Non-Fixed Flavorant does not include any fixed flavorant that may be become displaced from the surface of the kernel. | | |

### Amount of Total Fixed Flavorant in Respect to Popcorn Kernels

The amount of total fixed flavorant, as a weight ratio to the unpopped popcorn kernels, is at least 0.005. Alternately or additionally, the amount of total fixed flavorant, as a weight ratio to the unpopped popcorn kernels, is no more than 0.20. Typically, the total fixed flavorant to the unpopped popcorn is 0.01 to 0.15, and preferably is about 0.02 to 0.10, and more preferably about 0.03 to 0.05.

### Amount of Non-NaCl Fixed Flavorant in Respect to Popcorn Kernels

The amount of the non-NaCl fixed flavorant, as a weight ratio to the unpopped popcorn kernels, is at least 0.005. Alternately or additionally, the amount of non-NaCl fixed flavorant, as a weight ratio to the unpopped popcorn kernels, is no more than about 0.20. Typically, the non-NaCl fixed flavorant to the unpopped popcorn is 0.01 to 0.15, and preferably is 0.04 to 0.12.

### Amount of Total Non-Fixed Flavorant in Respect to Popcorn Kernels

The amount of total non-fixed flavorant, as a weight ratio to the unpopped popcorn kernels, is at least 0.005. Alternately or additionally, the amount of total non-fixed flavorant, as a weight ratio to the unpopped popcorn kernels, is no more than 0.20. Typically, the total non-fixed flavorant to the unpopped popcorn is 0.01 to 0.15, and preferably is 0.05 to 0.1.

### Amount of Non-NaCl Non-Fixed Flavorant in Respect to Popcorn Kernels

The amount of the non-NaCl non-fixed flavorant, as a weight ratio to the unpopped popcorn kernels, is at least 0.005. Alternately or additionally, the amount of non-NaCl non-fixed flavorant, as a weight ratio to the unpopped popcorn kernels, is no more than 0.20. Typically, the non-NaCl non-fixed flavorant to the unpopped popcorn is 0.005 to 0.10, and preferably is 0.01 to 0.07.

### Amount of Fixed Flavorant to Non-Fixed Flavorant

Suitable amounts of the fixed flavorant as a ratio to the non-fixed flavorant, for both the total flavorant and non-NaCl flavorant, is 0.1 to 10. That is, there could be ten times more of one flavorant than the other flavorant. Typically, the fixed flavorant to the non-fixed flavorant is about 0.2 to 5, more typically about 0.5 to 2.

### Details Regarding Packages for Popcorn Products

As discussed above, the unpopped, microwaveable popcorn composition is provided in a package to form the popcorn product. In general, such a product includes a microwave popcorn package of some type, for example a bag in accord with U.S. Patent Nos. 5,044,777; 5,690,084, or 5,753,895, or a tub in accord with U.S. Patent Nos. 5,008,024, 5,097,107 or 5,834,046, with the popcorn composition appropriately positioned therein. In typical preferred systems, the microwave package contains a microwave interactive construction or susceptor to enhance the popping operation. Such susceptors are described, for example, in U.S. Patent Nos. 5,149,396; 5,175,031; 5,338,911; and 5,285,040.

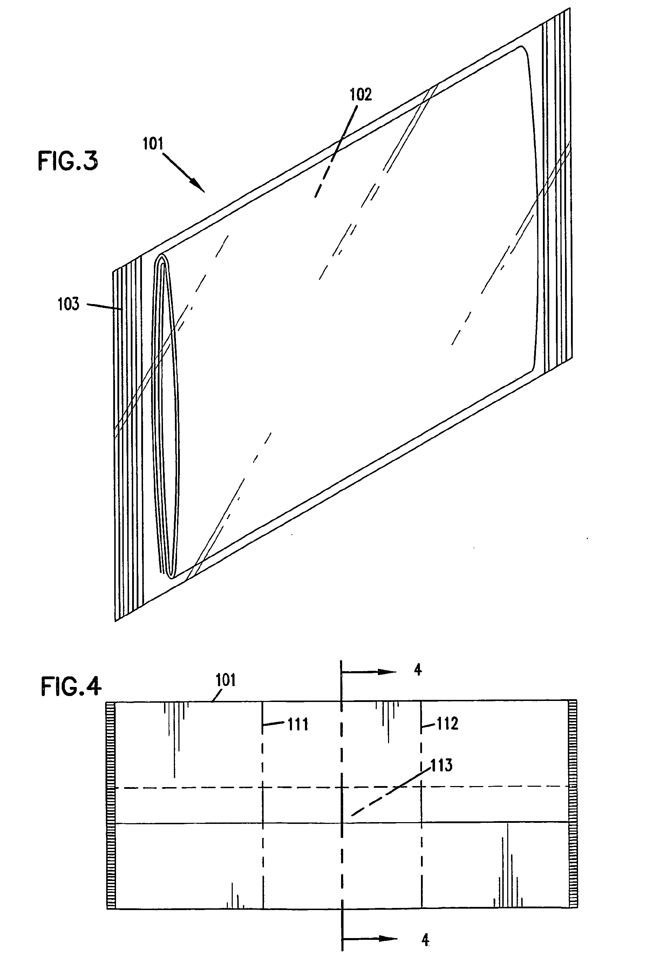

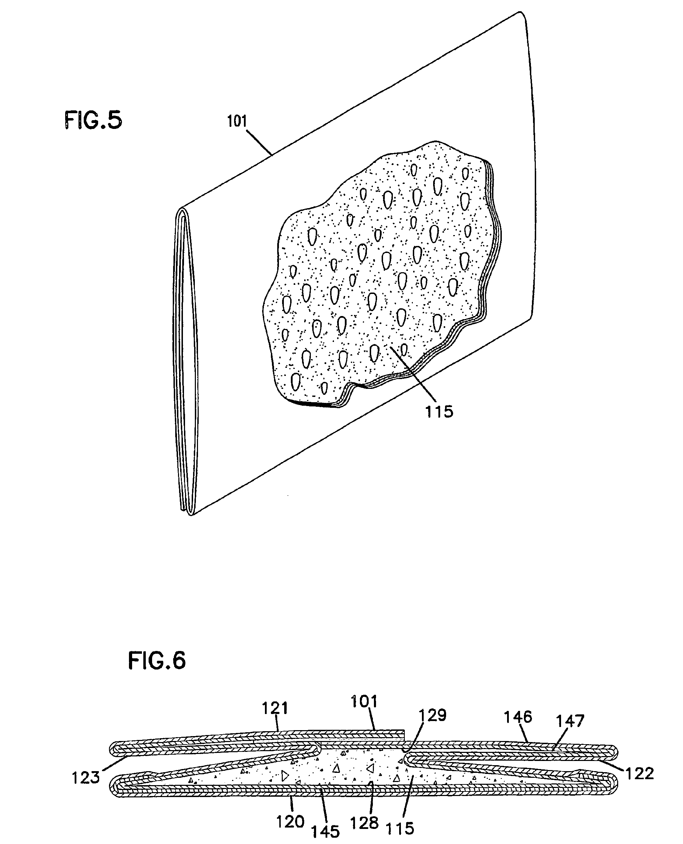

Attention is now directed to Figures 3-8. In Figure 3 a microwave popcorn package 101 is depicted stored or oriented substantially vertically. Package 101 is depicted in a trifold configuration 102, included with an overwrap 103 for storage. In Figure 4, a top plan view of popcorn package 101 is shown schematically in an unfolded configuration and oriented much as it would be when positioned in a microwave oven for popping of the popcorn composition contained therein, but before expansion of the package. In Figure 4, lines 111 and 112 indicate fold lines which define central region 113 of the arrangement. Inside the bag in central region 113, the unpopped popcorn composition would generally be positioned in orientation above a portion of the bag in which a microwave interactive construction is positioned. The term "microwave interactive" is meant to refer to a material that becomes hot upon exposure to microwave energy in a microwave oven. Typical microwave interactive constructions utilize a metallized polymeric component (for example, aluminized products) positioned in package 101.

During the popping operation, moisture inside the popcorn kernels absorbs microwave energy, generating sufficient steam and heat for popping and for expansion of package 101. In addition, the microwave interactive material also absorbs microwave energy and dissipates heat to the popcorn composition. In preferred constructions, the microwave interactive material occupies at least central region 113. This increases the thermoconductive contact between the popcorn composition and the microwave interactive material, which is preferred, since it leads to efficient utilization of the microwave interactive material and to preferred heat transfer and heat retention characteristics in connection with the popcorn popping process.

In Figure 5, package 101 is shown removed from overwrap 103, but not unfolded. Portions are shown broken away, to show where a popcorn composition 115 is internally received. The terms "popcorn charge", or "popcorn composition" or variants thereof are meant to refer to the unpopped popcorn composition described in this disclosure. In other words, the terms refer to the food components placed into package 101, prior to popping.

Attention is now directed to Figure 6, a cross-section taken generally along line 4-4 of Figure 4. From a review of Figure 6, it will be understood that package 101 generally comprises a two-ply (146, 147) configuration defining first and second opposite panels 120 and 121 joined by first and second side gussets 122 and 123. Gussets 122 and 123 generally separate popcorn package 101 into first and second expandable tubes 128 and 129. Popcorn composition 115 is substantially positioned and substantially retained within tube 128. Tube 129, prior to popping, is generally collapsed. In preferred arrangements, prior to popping tube 129 is sealed closed by temporary heat seals. Underneath popcorn composition 115, package 101 includes a microwave interactive construction or susceptor 145. The microwave interactive construction or susceptor 145 may be of conventional design. In certain arrangements, such as the one shown in Figure 6, susceptor 145 is positioned between the two plies 146, 147 from which flexible package 101 is folded.

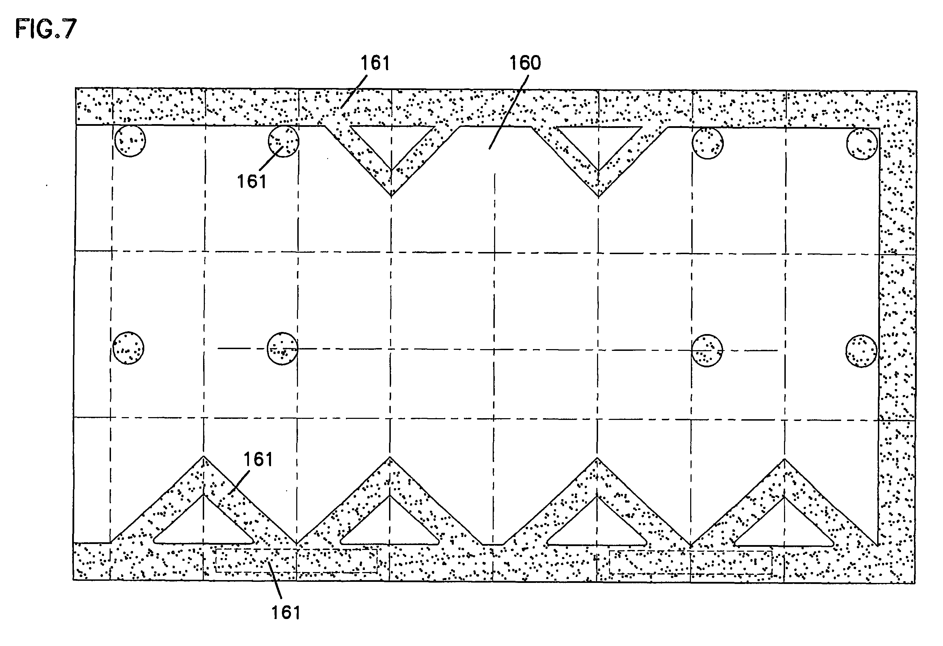

In Figure 7, a panel 160 is shown; panel 160 is a blank or sheet of flexible material from which package 101 is folded. Panel 160 includes various sealant fields 161 thereon, shown in dot pattern, which provide desired features in the resulting folded package 101. The function of such sealant fields 161, to provide a desirable microwave product, is described in U.S. Patent No. 5,650,084.

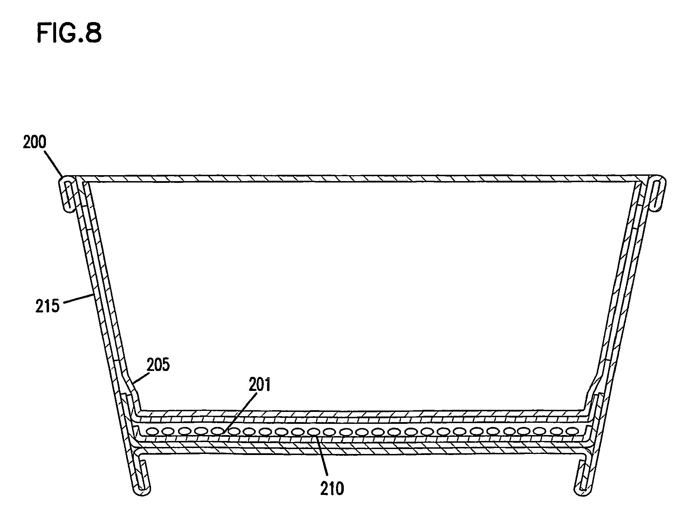

In alternate embodiments, microwave popcorn compositions according to the disclosure can be provided in tub configurations, as for example shown schematically in Figure 8 and characterized in U.S, Patent No. 5,834,024. A cross-section of a tub 200 is depicted in Figure 8, containing popcorn composition 201. Popcorn composition 201 is positioned in proximity to a microwave interactive construction 210. Such tubs are generally made from a paperboard or fiberboard material, with a flexible film used for a cover. In general, with such arrangements, a cover 205 expands or balloons under the heat and steam produced during the popcorn popping operation. Tub 200 has an inverted conical sidewall construction 215 that facilitates nesting and stacking, facilitates popping of composition 201, and provides a bowl after popping and opening/removal of cover 205.

### Popped Popcorn Product

The flavored unpopped popcorn composition, described above, is placed in a package such as a bag or a tub, also described above, and is provided to consumers. The consumer places the package in a microwave oven and applies microwave energy to achieve a popped, flavored popcorn product.

The invention will be further described and illustrated in the examples which follow. The examples are illustrative of the invention and should not be construed as limiting the scope to their details. All parts, percentages, ratios, etc. are by weight unless otherwise specified.

### EXAMPLES

### Example 1 - Pepperoni Pizza Flavored Popcorn Composition

A pepperoni pizza flavored popcorn composition can be made using a mozzarella fixed flavorant and a pepperoni pizza non-fixed flavorant.

The popcorn composition of Example 1 was a pepperoni pizza flavored popcorn composition. Mozzarella flavorant was fixed on the popcorn kernels, and pepperoni pizza flavorant was non-fixed, but was present in an oil/fat distribution component. The primary flavor component for the fixed flavorant was cheese flavor, and the primary flavor components for the non-fixed flavorant were pepperoni and pizza.

The adhesive coating composition used for Example 1 was prepared by mixing the ingredients listed below.

| Ingredient | Weight (grams) | Weight % |
|---|---|---|
| Sodium citrate | 1.07 | 0.12 |
| Kelcogel F gum | 3.60 | 0.39 |
| Salt (Morton 200) | 9.08 | 0.99 |
| Tap water | 908.00 | 98.50 |
| Total | 921.75 | 100.00 |

The mozzarella coated popcorn kernels were prepared by coating the adhesive coated kernels with 60 grams of the mixture, below.

| Ingredient | Weight (grams) | Weight % |
|---|---|---|
| Buttery cheese flavor (from Givaudan) | 75.00 | 71.43 |
| "Sharpee Cheese" flavor (from Kraft) | 2.00 | 1.91 |
| Spray dned mozzarella cheese (from Givaudan) | 5.00 | 4.76 |
| Salt | 13.00 | 12.38 |
| Maltodextrin B990 | 10.00 | 9.52 |
| Total | 105.00 | 100.00 |

A flavored oil/fat component was prepared by mixing together the oil, flavorant, and color listed below. The resulting 35 grams of oil/fat component, together with 70 grams of flavored unpopped popcorn kernels from above, were placed in a bag.

| Ingredient | Weight (grams) | Weight % of Slurry | Weight % of Composition |
|---|---|---|---|
| Soy oil | 30.00 | 85.71 | 28.57 |
| Salt | 2.50 | 7.14 | 2.38 |
| Pepperom Flavor (from Kraft) | 1.75 | 5.00 | 1.67 |
| Pizza Flavor (small beads, from Givaudan) | 0.25 | 0.71 | 0.24 |
| Oleoresin P-80DF | 0.25 | 0.71 | 0.24 |
| Color - Chroma-Kota Red #40 | 0.25 | 0.71 | 0.24 |
| Total in slurry | 35.00 | 100.00 | 33.33 |
| Corn | 70 | | 66.67 |
| Total in composition | 105 | | 100.00 |

### Example 2 - Buffalo Wing and Blue Cheese Flavored Popcorn Composition

A buffalo wing and blue cheese flavored popcorn composition can be made using a blue cheese fixed flavorant and a buffalo wing non-fixed flavorant.

The popcorn composition of Example 2 was a buffalo wing and blue cheese flavored popcorn composition. Blue cheese flavorant was fixed on the popcorn kernels, and buffalo wing flavorant was non-fixed, but was present in an oil/fat distribution component. The primary flavor component for the fixed flavorant was blue cheese flavor, and the primary flavor component for the non-fixed flavorant was buffalo wing flavor.

The adhesive composition used for Example 2 was prepared by mixing the ingredients listed below. This amount of adhesive composition was scaled to coat 1000 grams of unpopped popcorn kernels.

| Ingredient | Weight (grams) | Weight % |
|---|---|---|
| Sodium citrate | 0.035 | 0.13 |
| Kelcogel F gum | 0.12 | 0.45 |
| Salt (Morton 200) | 0.3 | 1.1 |
| Tap water | 25.5 | 96.4 |
| FD&C yellow #5 | 0.25 | 0.95 |
| FD&C red #40 | 0.25 | 0.95 |
| Total | 26.46 | 100 |

The blue cheese coated popcorn kernels were prepared by coating 1000 grams of the adhesive coated kernels with the flavorant mixture, below.

| Ingredient | Weight (grams) | Weight % |
|---|---|---|
| Starch 990 | 10.00 | 9.6 |
| Salt (Morton 200) | 14.00 | 13.4 |
| Blue cheese flavor (Kraft 7094200) | 5.00 | 4.8 |
| Cheese flavor | 75.00 | 71.8 |
| FD&C yellow #5 | 0.25 | 0.24 |
| FD&C red #40 | 0.25 | 0.24 |
| Total | 104.50 | 100 |

A flavored oil/fat component was prepared by mixing together the oil, flavorants, and colors listed below. 31.5 grams of the flavored oil/fat component were combined with 67 grams of flavored unpopped popcorn kernels from above and placed in a bag.

| Ingredient | Weight (grams) | Weight % of Slurry | Weight % of Composition |
|---|---|---|---|
| Soy oil | 27.90 | 88.57 | 28.3 |
| Salt | 2.90 | 9.21 | 2.9 |
| Buffalo wing favor | 0.40 | 1.27 | 0.4 |
| Annatto color | 0.10 | 0.32 | 0.1 |
| Color-OP-40 | 0.20 | 0.63 | 0.2 |
| Total Slurry | 31.5 | 100.00 | 32.0 |
| Corn | 67 | | 68.0 |
| Total in Bag | 98.5 | | 100 |

### Example 3 - Cheese Flavored Popcorn Composition

A cheese flavored popcorn composition can be made using a cheese fixed flavorant and a cheese non-fixed flavorant.

The popcorn composition of Example 3 was a cheese flavored popcorn composition. Although the flavoring of the product was cheese, various types of cheese flavorants were used and the cheese flavorants were fixed on the popcorn kernels, and were non-fixed and within a distribution component. The primary flavor component for the fixed flavorant was cheese flavor, and the primary flavor component for the non-fixed flavorant was also cheese.

The adhesive composition used for Example 3 was prepared in the same manner as for Example 2. Cheese coated popcorn kernels were prepared by coating 1000 grams of the adhesive coated kernels with the mixture, below.

| Ingredient | Weight (grams) | Weight % |
|---|---|---|
| Starch 990 | 10.00 | 9.6 |
| Salt (Morton 200) | 14.00 | 13.4 |
| Cheese flavor (IFFSN071882) | 5.00 | 4.8 |
| Cheese flavor (GV516107) | 75.00 | '/1.8 |
| FD&C yellow #5 | 0.25 | 0.24 |
| FD&C red #40 | 0.25 | 0.24 |
| Total | 104.50 | 100 |

A flavored oil/fat component was prepared by mixing together the oil, the flavorants, and colors listed below. 33 grams of the flavored oil/fat component were combined with 67 grams of flavored unpopped popcorn kernels from above and placed in a bag.

| Ingredient | Weight (grams) | Weight % of Slurry | Weight % of Composition |
|---|---|---|---|
| Soy oil | 27.90 | 84.55 | 27.90 |
| Salt | 2.90 | 8.79 | 2.90 |
| Cheese flavor (IFFSN071882) | 0.40 | 1.21 | 0.40 |
| Cheese flavor (GV516107) | 1.50 | 4.55 | 1.50 |
| Annatto color | 0.10 | 0.30 | 0.10 |
| Color-OP-40 | 0.20 | 0.61 | 0.20 |
| Total Slurry | 33 | 100.00 | 33 |
| Corn | 67 | | 67 |
| Total in Bag | 100 | | 100 |

### Example 4 - Mozzarella Garlic Flavored Popcorn Composition

A mozzarella garlic flavored popcorn composition can be made using a mozzarella cheese fixed flavorant and garlic non-fixed flavorant.

The popcorn composition of Example 4 was a mozzarella garlic flavored popcorn composition. Mozzarella flavorant was fixed on the popcorn kernels, and garlic flavorant was non-fixed and present in an oil/fat distribution component. The primary flavor component for the fixed flavorant was mozzarella cheese flavor, and the primary flavor component for the non-fixed flavorant was garlic. Butter flavor was also present in the non-fixed flavorant.

The mozzarella coated popcorn kernels were prepared as described in Example 1. A flavored oil/fat component was prepared by mixing together the oil, flavorant, and colors listed below. 30 grams of the flavored oil/fat component were combined with 70 grams of flavored unpopped popcorn kernels from above and placed in a bag.

| Ingredient | Weight (grams) | Weight % of Slurry | Weight % of Composition |
|---|---|---|---|
| Soy oil | 27.16 | 90.52 | 27.16 |
| Salt | 2.20 | 7.33 | 2.20 |
| Butter flavor (IF460) | 0.30 | 1.00 | 0.30 |
| Yellow color | 0.04 | 0.14 | 0.04 |
| Butter flavor (IF566) | 0.10 | 0.33 | 0.10 |
| Garlic Butter (from Givaudan) | 0.20 | 0.67 | 0.20 |
| Total Slurry | 30 | 100.00 | 30 |
| Corn | 70 | | 70 |
| Total in Bag | 100 | | 100.00 |

### Example 5 - Applewood-Barbeque Flavored Popcorn Composition

An applewood-barbeque flavored popcorn composition can be made using a barbeque fixed flavorant and applewood and barbeque non-fixed flavorant.

The popcorn composition of Example 5 was an applewood-barbeque flavored popcorn composition. Barbeque flavorant was fixed on the popcorn kernels, and both applewood and barbeque non-fixed and present in an oil/fat distribution component. The primary flavor component for the fixed flavorant was barbeque flavor, and the primary flavor component for the non-fixed flavorant was applewood

The adhesive composition used for Example 5 was prepared by mixing the ingredients listed below. The adhesive composition was scaled to coat 1000 grams of unpopped kernels.

| Ingredient | Weight (grams) | Weight % |
|---|---|---|
| Sodium citrate | 1.07 | 0.12 |
| Kelcogel F gum | 3.60 | 0.39 |
| Salt (Morton 200) | 9.08 | 0.99 |
| Tap water | 908.00 | 98.48 |
| FD&C Yellow | 0.20 | 0.02 |
| FD&C Yellow | 0.10 | 0.01 |
| Red color | 0.20 | 0.03 |
| Total | 922.05 | 100 |

1000 grams of the adhesive coated kernels were coated with the mixture, below, to provide the BBQ coated popcorn kernels.

| Ingredient | Weight (grams) | Weight % |
|---|---|---|
| BBQ seasoning (from Givaudan) | 99.50 | 99.50 |
| Red color | 0.50 | 0.50 |
| Total | 104.50 | 100 |

A flavored oil/fat component was prepared by mixing together the oil, flavorant, and colors listed below. 32.15 grams of the flavored oil/fat component were combined with 70 grams of flavored unpopped popcorn kernels from above and placed in a bag.

| Ingredient | Weight (grams) | Weight % of Slurry | Weight % of Composition |
|---|---|---|---|
| Soy oil | 265.16 | 88.39 | 27.82 |
| Salt | 9.89 | 3.30 | 1.04 |
| Sucralose | 0.22 | 0.07 | 0.02 |
| Color-OP-80 | 2.33 | 0.78 | 0.24 |
| Color - Chromakota Red | 2.33 | 0.78 | 0.24 |
| Applewood flavor (from Kraft) | 9.33 | 3.11 | 0.98 |
| Hickory flavor (from Givaudan) | 1.40 | 0.47 | 0.15 |
| BBQ seasoning (from Givaudan) | 9.33 | 3.11 | 0.98 |
| Total Slurry | 32.15 | 100.00 | 31.47 |
| Corn | 70 | | 68.53 |
| Total in Bag | 102.15 | | 100.00 |

### Example 6 - Garlic Butter Flavored Popcorn Composition

A garlic butter flavored popcorn composition can be made using butter fixed flavorant and garlic butter non-fixed flavorant.

The popcorn composition of Example 6 was a garlic butter flavored popcorn composition. Butter flavorant was fixed on the popcorn kernels, and garlic butter flavorant was non-fixed and was present in an oil/fat component. The primary flavor component for the fixed flavorant was butter flavor, and the primary flavor component for the non-fixed flavorant was garlic. Butter flavor was also present in the non-fixed flavorant.

The adhesive composition used for Example 6 was prepared by mixing the ingredients listed below. 18 drops of the tacking solution were applied to 70 grams of unpopped kernels.

| Ingredient | Weight (grams) | Weight % |
|---|---|---|
| Sodium citrate | 1.07 | 0.12 |
| Kelcogel F gum | 3.60 | 0.39 |
| Salt (Morton 200) | 9.08 | 0.99 |
| Tap water | 908.00 | 98.48 |
| FD&C yellow #5 | 0.20 | 0.02 |
| FD&C yellow #6 | 0.10 | 0.01 |
| Total | 922.05 | 100.00 |

The butter coated popcorn kernels were prepared by coating 70 grams of the adhesive coated kernels with the total mixture, below.

| Ingredient | Weight (grams) | Weight % |
|---|---|---|
| Salt | 50.00 | 45.29 |
| Maltodextrin B990 | 10.00 | 9.06 |
| 50X butter flavor | 25.00 | 22.64 |
| IFF butter flavor | 25.00 | 22.64 |
| FD&C yellow #5 | 0.30 | 0.27 |
| FD&C yellow #6 | 0.10 | 0.09 |
| Total | 110.4 | 100.00 |

A flavored oil/fat component was prepared by mixing together the oil, the flavorant, and color listed below. The resulting 30 grams of oil/fat component, together with the 70 grams of butter flavored unpopped popcorn kernels from above, were placed in a bag.

| Ingredient | Weight (grams) | Weight % of Slurry | Weight % of Composition |
|---|---|---|---|
| Soy oil | 26.91 | 89.69 | 26.91 |
| Salt | 2.45 | 8.17 | 2.45 |
| Butter flavor (IF460) | 0.30 | 1.00 | 0.30 |
| Yellow color (IC190) | 0.04 | 0.14 | 0.04 |
| Butter flavor (IF566) | 0.10 | 0.33 | 0.10 |
| Garlic Butter (from Givaudan) | 0.20 | 0.67 | 0.20 |
| Total in slurry | 30.00 | 100.00 | 30 |
| Corn | 70 | | 70 |
| Total in bag | 100 | | 100.00 |

### Example 7- Butter Flavored Popcorn Composition

A butter flavored popcorn composition can be made using butter fixed flavorant and butter non-fixed flavorant.

The popcorn composition of Example 7 was a butter flavored popcorn composition; with the fixed flavorant having two butter ingredients and the non-fixed flavorant having two butter ingredients. The primary flavor component for the fixed flavorant was butter flavor, and the primary flavor component for the non-fixed flavorant was butter.

The butter coated popcorn kernels were prepared as described in Example 6. The flavored oil/fat component was prepared by mixing together the oil, flavorant, and colors listed below. 35 grams of the flavored oil/fat component were combined with 65 grams of butter flavored unpopped popcorn kernels from above and placed in a bag.

| Ingredient | Weight (grams) | Weight % of Slurry | Weight % of Composition |
|---|---|---|---|
| Soy oil | 28.98 | 82.80 | 28.98 |
| Salt | 1.05 | 3.00 | 1.05 |
| DFA Butter flavor | 4.2 | 12.00 | 4.2 |
| Butter flavor | 0.35 | 1.00 | 0.35 |
| Annatto color | 0.42 | 1.20 | 0.42 |
| Total Slurry | 35 | 100.00 | 35 |
| Corn | 65 | | 65 |
| Total in Bag | 100 | | 100.00 |

### Example 8 - Colored Cheese Flavored Popcorn Composition

A cheese flavored popcorn composition can be made using cheese fixed flavorant and cheese non-fixed flavorant.

The popcorn composition of Example 8 was a cheese flavored popcorn composition. Two different cheese flavorants were fixed on the popcorn kernels, and two different cheese flavorants were non-fixed, as was a bacon flavorant.

The adhesive coating composition used for Example 8, which included the fixed flavorant therein, was prepared by mixing the ingredients listed below.

| Ingredient | Weight (grams) | Weight % |
|---|---|---|
| Cheese flavor (Givaudan #583218) | 88.5 | 44.25 |
| "Sharpee Cheese" flavor (from Kraft) | 3.0 | 1.50 |
| Salt (Morton 200) | 8.5 | 4.25 |
| Tap water | 100.0 | 50.00 |
| Total | 200.0 | 100.00 |

The Givauden cheese flavor used was approximately 55% flavorant and 45% adhesive. Thus, the amount of flavorant from this ingredient was about 48.7 grams, which was about 24.3 wt-% of the total composition. The amount of adhesive from this ingredient was about 39.8 grams, which was about 19.9 wt-%.

The cheese coated popcorn kernels were prepared by coating the unpopped kernels with the flavored adhesive coating composition prepared above. The coating was applied by passing the kernels through a screw auger (also referred to as a screw lift). As the kernels progressed along the auger, the adhesive coating composition was poured onto the kernels. The coated kernels were dried in a vibratory fluid bed drier from Carman Industries and sieved to break-up any agglomerates of kernels. Dried, the flavored coating composition was approximately 4 wt-% of the popcorn kernels.

A flavored oil/fat component was prepared by mixing together the oil, flavorants, salt, and color listed below. The resulting 38 grams of oil/fat component, together with 66 grams of flavored unpopped popcorn kernels from above, were placed in a bag.

| Ingredient | Weight (grams) | Weight % of Slurry | Weight % of Composition |
|---|---|---|---|
| Soy oil | 30.06 | 80.53 | 28.9 |
| Salt | 3.40 | 8.95 | 3.3 |
| Cheese flavor (Givaudan #557378) | 0.40 | 1.05 | 0.4 |
| '"Cheese Top Notes" flavor (Givaudan #563259) | 0.30 | 0.79 | 0.3 |
| Bacon flavor (Givaudan #548112) | 0.80 | 2.11 | 0.8 |
| Orange color #2404 | 1.80 | 4.74 | 1.7 |
| Orange color OD-009 (from Chris Hanson) | 0.70 | 1.84 | 0.7 |
| Total slurry | 38.00 | 100.00 | 36.5 |
| Corn | 66 | | 63.5 |
| Total in bag | 104 | | 100.00 |

### Example 9 - Cheese Flavored Popcorn Composition

A cheese flavored popcorn composition can be made using cheese fixed flavorant and cheese non-fixed flavorant.

The popcorn composition of Example 9 was a cheese flavored popcorn composition. Two different cheese flavorants were fixed on the popcorn kernels, and two different cheese flavorants were non-fixed, as was a bacon flavorant.

The cheese flavored coated popcorn kernels were prepared as described in Example 8 using a flavored adhesive composition.

A flavored oil/fat component was prepared by mixing together the oil, flavorants, salt, and color listed below. The resulting 38 grams of oil/fat component, together with 66 grams of flavored unpopped popcorn kernels from above, were placed in a bag.

| Ingredient | Weight (grams) | Weight % of Slurry | Weight % of Composition |
|---|---|---|---|
| Soy oil | 33.10 | 87.11 | 31.8 |
| Salt | 3.40 | 8.95 | 3.3 |
| Cheese flavor (Givaudan #557378) | 0.40 | 1.05 | 0.4 |
| "Cheese Top Notes" flavor (Givaudan #563259) | 0.30 | 0.79 | 0.3 |
| Bacon flavor (Givaudan #548112) | 0.80 | 2.11 | 0.8 |
| Total slurry | 38.00 | 100.00 | 36.5 |
| Corn | 66 | | 63.5 |
| Total in bag | 104 | | 100.00 |

### Example 10 - Colored Cheese Flavored Popcorn Composition

A cheese flavored popcorn composition can be made using cheese fixed flavorant and cheese non-fixed flavorant.

The popcorn composition of Example 10 was a cheese flavored popcorn composition. Two different cheese flavorants were fixed on the popcorn kernels, and two different cheese flavorants and one butter flavorant were non-fixed.

The cheese flavored coated popcorn kernels were prepared as described in Example 8 using a flavored adhesive composition.

A flavored oil/fat component was prepared by mixing together the oil, flavorants, salt, and color listed below. The resulting 38 grams of oil/fat component, together with 66 grams of flavored unpopped popcorn kernels from above, were placed in a bag.

| Ingredient | Weight (grams) | Weight % of Slurry | Weight % of Composition |
|---|---|---|---|
| Soy oil | 31.20 | 82.11 | 30.0 |
| Salt | 3.40 | 8.95 | 3.3 |
| Cheese flavor (Givaudan #557378) | 0.40 | 1.05 | 0.4 |
| "Cheese Top Notes" flavor (Givaudan #563259) | 0.30 | 0.79 | 0.3 |
| Artificial AA butter flavor (from Kraft) | 0.20 | 0.53 | 0.2 |
| Orange color #2404 | 1.80 | 4.74 | 1.7 |
| Orange color OD-009 (from Chris Hanson) | 0.70 | 1.84 | 0.7 |
| Total slurry | 38.00 | 100.00 | 36.5 |
| Corn | 66 | | 63.5 |
| Total in bag | 104 | | 100.00 |

### Example 11- Cheese Flavored Popcorn Composition

A cheese flavored popcorn composition can be made using cheese fixed flavorant and cheese non-fixed flavorant.

The popcorn composition of Example 11 was a cheese flavored popcorn composition. Two different cheese flavorants were fixed on the popcorn kernels, and two different cheese flavorants and one butter flavorant were non-fixed.

The cheese flavored coated popcorn kernels were prepared as described in Example 8 using a flavored adhesive composition.

A flavored oil/fat component was prepared by mixing together the oil, flavorants, salt, and color listed below. The resulting 38 grams of oil/fat component, together with 66 grams of flavored unpopped popcorn kernels from above, were placed in a bag.

| Ingredient | Weight (grams) | Weight % of Slurry | Weight % of Composition |
|---|---|---|---|
| Soy oil | 33.70 | 88.68 | 32.4 |
| Salt | 3.40 | 8.95 | 3.3 |
| Cheese flavor (Givaudan #557378) | 0.40 | 1.05 | 0.4 |
| "Cheese Top Notes" flavor (Givaudan #563259) | 0.30 | 0.79 | 0.3 |
| Artificial AA butter flavor (from Kraft) | 0.20 | 0.53 | 0.2 |
| Total slurry | 38.00 | 100.00 | 36.5 |
| Corn | 66 | | 63.5 |
| Total in bag | 104 | | 100.00 |

## Claims

1. An unpopped, microwaveable popcorn composition comprising:
(a) unpopped popcorn kernels each having an outer surface;
(b) fixed flavorant adhered on the outer surfaces of the kernels by a gum or starch;
(c) an oil/fat distribution component; and
(d) a non-fixed flavorant within the oil/fat distribution component.

2. The composition according to claim 1, wherein:
(a) the oil/fat distribution component is present at a level of at least 1 wt-% of the popcorn composition.

3. The composition according to claim 2, wherein:
(a) the oil/fat distribution component is present at a level ofno more than 50 wt-% of the popcorn composition.

4. The composition according to claim 3, wherein:
(a) the oil/fat distribution component is present at a level of at least 25 wt-% of the popcorn composition.

5. The composition according to claim 3, wherein:
(a) the oil/fat distribution component is present at a level of no more than 20 wt-% of the popcorn composition.

6. The composition according to claim 3, wherein:
(a) the oil/fat distribution component is present at a level of no more than 5 wt-% of the popcorn composition.

7. The composition according to claim 1, Wherein:
(a) the gum or starch is present at a level of 1 to 5 wt-% of the kernels.

8. The composition according to claim 1, wherein:
(a) the gum is a food-grade gum or the starch is a hydrated starch.

9. The composition according to claim 1, wherein:
(a) the fixed flavorant comprises non-NaCl fixed flavorant; and
(b) the non-fixed flavorant comprises non-NaCl non-fixed flavorant.

10. The composition according to claim 9, wherein:
(a) the fixed flavorant comprises NaCl fixed flavorant.

11. The composition according to claim 9, wherein:
(a) the non-fixed flavorant comprises NaCl non-fixed flavorant.

12. The composition according to claim 9, wherein:
(a) the non-NaCl fixed flavorant comprises at least one flavorant material selected from the group consisting of butter flavoring, cheese flavoring, pizza flavoring, barbeque flavoring, buffalo wing flavoring, pepperoni flavoring, and mixtures thereof; and
(b) the non-NaCl non-fixed flavorant comprises at least one flavorant material selected from the group consisting of butter flavoring, cheese flavoring, pizza flavoring, barbeque flavoring, buffalo wing flavoring, pepperoni flavoring, and mixtures thereof.

13. The composition according to claim 12, wherein:
(a) a weight ratio of non-NaCl fixed flavorant to the unpopped popcorn kernels is 0.01 to 0.15.

14. The composition according to claim 12, wherein:
(a) a weight ratio of non-NaCl non-fixed flavorant to the unpopped popcorn kernels is 0.005 to 0.1.

15. The composition according to claim 12, wherein:
(a) a weight ratio of the non-Nacl fixed flavorant to non-Nad non-fixed flavorant is 0.2 to 5.

16. The composition according to claim 12, wherein:
(a) the non-NaCl fixed flavorant is present at a level of at least 0.5 wt-% and no greater than 15 wt-% of the total composition.

17. The composition according to claim 12. wherein:
(a) the non-NaCl non-fixed flavorant is present at a level of at least 0.2 wt-% and no greater than 15 wt-% of the total composition.

18. The composition according to claim 1, wherein:
(a) the fixed flavorant comprises at least one flavorant material selected from the group consisting of salt, butter flavoring, cheese flavoring, pizza flavoring, barbeque flavoring, buffalo wing flavoring, pepperoni flavoring, and mixtures thereof; and
(b) the non-fixed flavorant comprises at least one flavorant material selected from the group consisting of salt, butter flavoring, cheese flavoring, pizza flavoring, barbeque flavoring, buffalo wing flavoring, pepperoni flavoring, garlic flavoring, and mixtures thereof.

19. The composition according to claim 18, wherein:
(a) a weight ratio of fixed flavorant to the unpopped popcorn kernels is 0.01 to 0.15.

20. The composition according to claim 18, wherein:
(a) a weight ratio of non-fixed flavorant to the unpopped popcorn kernels is 0.01 to 0.15.

21. The composition according to claim 18, wherein:
(a) a weight ratio of the fixed flavorant to non-fixed flavorant is 0.2 to 5.

22. An unpopped, microwaveable popcorn composition according to claim 1, comprising:
(a) unpopped popcorn kernels each having an outer surface;
(b) non-Nacl fixed flavorant on the outer surfaces of the kernels with gum or starch at a level of at least 1 wt-% of the unpopped popcorn kernels; and
(c) an oil/fat distribution component, a non-NaCl non-fixed flavorant distributed within the oil/fat distribution component, the non-NaCl non-fixed flavorant at a level of at least 0.5 wt-% of the unpopped popcorn kernels.

23. The composition according to claim 22, wherein:
(a) the non-NaCl fixed flavorant on the outer surface of the kernels is at a level of 1 to 15 wt-% of the unpopped popcorn kernels; and
(b) the non-NaCl non-fixed flavorant is at a level of 1 to 15 wt-% of the unpopped popcorn kernels.

24. The composition according to claim 23, wherein:
(a) the non-NaCl fixed flavorant on the outer surface of the kernels at a level of 5 to 13 wt-% of the unpopped popcorn kernels; and
(b) the nun-NaCl non-fixed flavorant at a level of 5 to 10 wt-% of the unpopped popcorn kernels.

25. A microwaveable popcorn product comprising:
(a) a container suitable for use in a microwave popcorn popping process; and,
(b) a microwaveable popcorn composition positioned inside the container and comprising:
(i) unpopped popcorn kernels each having an outer surface;
(ii) non-NaCl fixed flavorant adhered on the outer surfaces of the kernels by a gum or starch;
(iii) an oil/fat distribution component; and
(iv) non-NaCl non-fixed flavorant present within the oil/fat distribution component.

26. The product according to claim 25, further comprising:
(a) NaCl flavorant, present as either fixed flavorant or non-fixed flavorant.

27. The product according to claim 25 wherein:
(a) the container is a two-ply bag construction with a microwave interactive construction positioned between, an inner ply and an outer ply.

28. The product according to claim 25 wherein:
(a) the container is a fiberboard tub.

## Patentansprüche

1. Ungeröstete, mikrowellentaugliche Popcornzusammensetzung, die folgendes aufweist:
(a) ungeröstete Popcornkerne mit jeweils einer Außenseite;
(b) einen fixierten Geschmacksstoff, der durch einen Gummi oder Stärke an der Außenseite der Kerne haftet;
(c) eine Öl/Fett-Verteilungskomponente; und
(d) einen nicht fixierten Geschmacksstoff innerhalb der Öl/Fett-Verteilungskomponente.

2. Zusammensetzung nach Anspruch 1, wobei:
(a) die Öl/Fett-Verteilungskomponente in einer Menge von mindestens 1 Gew.-% der Popcornzusammensetzung vorliegt.

3. Zusammensetzung nach Anspruch 2, wobei:
(a) die Öl/Fett-Verteilungskomponente in einer Menge von nicht mehr als 50 Gew.-% der Popcornzusammensetzung vorliegt.

4. Zusammensetzung nach Anspruch 3, wobei:
(a) die Öl/Fett-Verteilungskomponente in einer Menge von mindestens 25 Gew.-% der Popcornzusammensetzung vorliegt.

5. Zusammensetzung nach Anspruch 3, wobei:
(a) die Öl/Fett-Verteilungskomponente in einer Menge von nicht mehr als 20 Gew.-% der Popcornzusammensetzung vorliegt.

6. Zusammensetzung nach Anspruch 3, wobei:
(a) die Öl/Fett-Verteilungskomponente in einer Menge von nicht mehr als 5 Gew.-% der Popcornzusammensetzung vorliegt.

7. Zusammensetzung nach Anspruch 1, wobei:
(a) der Gummi oder die Stärke in einer Menge von 1 bis 5 Gew.-% der Kerne vorliegt.

8. Zusammensetzung nach Anspruch 1, wobei:
(a) der Gummi ein Gummi mit Lebensmittelqualität ist oder die Stärke hydratisierte Stärke ist.

9. Zusammensetzung nach Anspruch 1, wobei:
(a) der fixierte Geschmacksstoff einen von NaCl verschiedenen, fixierten Geschmacksstoff umfaßt; und
(b) der nicht fixierte Geschmacksstoff einen von NaCl verschiedenen, nicht fixierten Geschmacksstoff umfaßt.

10. Zusammensetzung nach Anspruch 9, wobei:
(a) der fixierte Geschmacksstoff einen fixierten NaCl-Geschmacksstoff umfaßt.

11. Zusammensetzung nach Anspruch 9, wobei:
(a) der nicht fixierte Geschmacksstoff einen nicht fixierten NaCl-Geschmacksstoff umfaßt.

12. Zusammensetzung nach Anspruch 9, wobei:
(a) der von NaCl verschiedene, fixierte Geschmacksstoff zumindest ein Geschmacksstoffmaterial umfaßt, das aus der Gruppe von Buttergeschmack, Käsegeschmack, Pizzageschmack, dem Geschmack von Grillgut, dem Geschmack von scharf gewürzten, fritierten Hähnchenflügeln, Peperonigeschmack und Gemischen davon ausgewählt ist; und
(b) der von NaCl verschiedene, nicht fixierte Geschmacksstoff zumindest ein Geschmacksstoffmaterial umfaßt, das aus der Gruppe von Buttergeschmack, Käsegeschmack, Pizzageschmack, dem Geschmack von Grillgut, dem Geschmack von scharf gewürzten, fritierten Hähnchenflügeln, Peperonigeschmack und Gemischen davon ausgewählt ist

13. Zusammensetzung nach Anspruch 12, wobei:
(a) das Gewichtsverhältnis zwischen dem von NaCl verschiedenen, fixierten Geschmacksstoff und dem ungerösteten Popcornkernen 0,01 bis 0,15 beträgt.

14. Zusammensetzung nach Anspruch 12, wobei:
(a) das Gewichtsverhältnis zwischen dem von NaCl verschiedenen, nicht fixierten Geschmacksstoff und dem ungerösteten Popcornkernen etwa 0,005 bis 0,1 beträgt.

15. Zusammensetzung nach Anspruch 12, wobei:
(a) das Gewichtsverhältnis zwischen dem von NaCl verschiedenen, fixierten Geschmacksstoff und dem von NaCl verschiedene, nicht fixierten Geschmacksstoff 0,2 bis 5 beträgt.

16. Zusammensetzung nach Anspruch 12, wobei:
(a) der von NaCl verschiedene, fixierte Geschmacksstoff in einer Menge von mindestens 0,5 Gew.-% und nicht mehr als 15 Gew.-% der gesamten Zusammensetzung vorliegt.

17. Zusammensetzung nach Anspruch 12, wobei:
(a) der von NaCl verschiedene, nicht fixierte Geschmacksstoff in einer Menge von mindestens 0,2 Gew.-% und nicht mehr als 15 Gew.-% der gesamten Zusammensetzung vorliegt.

18. Zusammensetzung nach Anspruch 1, wobei:
(a) der fixierte Geschmacksstoff zumindest ein Geschmacksstoffmaterial umfaßt, das aus der Gruppe von Salz, Buttergeschmack, Käsegeschmack, Pizzageschmack, dem Geschmack von Grillgut, dem Geschmack von scharf gewürzten, fritierten Hähnchenflügeln, Peperonigeschmack und Gemischen davon ausgewählt ist; und
(b) der nicht fixierte Geschmacksstoff zumindest ein Geschmacksstoffmaterial umfaßt, das aus der Gruppe von Salz, Buttergeschmack, Käsegeschmack, Pizzageschmack, dem Geschmack von Grillgut, dem Geschmack von scharf gewürzten, fritierten Hähnchenflügeln, Peperonigeschmack, Knoblauchgeschmack und Gemischen davon ausgewählt ist.

19. Zusammensetzung nach Anspruch 18, wobei:
(a) das Gewichtsverhältnis zwischen dem fixierten Geschmacksstoff und den ungerösteten Popcornkernen 0,01 bis 0,15 beträgt.

20. Zusammensetzung nach Anspruch 18, wobei:
(a) das Gewichtsverhältnis zwischen dem nicht fixierten Geschmacksstoff und den ungerösteten Popcornkernen 0,01 bis 0,15 beträgt.

21. Zusammensetzung nach Anspruch 18, wobei:
(a) das Gewichtsverhältnis zwischen dem fixierten Geschmacksstoff und dem nicht fixierten Geschmacksstoff 0,2 bis 5 beträgt.

22. Ungeröstete, mikrowellentaugliche Popcornzusammensetzung nach Anspruch 1, die folgendes aufweist:
(a) ungeröstete Popcornkerne, die jeweils eine Außenseite aufweisen;
(b) einen von NaCl verschiedenen, mit Gummi oder Stärke an der Außenseite der Kerne fixierten Geschmacksstoff in einer Menge von mindestens 1 Gew.-% der ungerösteten Popcornkerne; und
(c) eine Öl/Fett-Verteilungskomponente, einen von NaCl verschiedenen, nicht fixierten Geschmacksstoff, der in der Öl/Fett-Verteilungskomponente verteilt ist, wobei der von NaCl verschiedene, nicht fixierte Geschmacksstoff in einer Menge von mindestens 0,5 Gew.-% der ungerösteten Popcornkerne vorliegt.

23. Zusammensetzung nach Anspruch 22, wobei:
(a) der von NaCl verschiedene, an der Außenseite der Kerne fixierte Geschmacksstoff in einer Menge von 1 bis 15 Gew.-% der ungerösteten Popcornkerne vorliegt; und
(b) der von NaCl verschiedene, nicht fixierte Geschmacksstoff in einer Menge von 1 bis 15 Gew.-% der ungerösteten Popcornkerne vorliegt.

24. Zusammensetzung nach Anspruch 23, wobei:
(a) der von NaCl verschiedene, an der Außenseite der Kerne fixierte Geschmacksstoff in einer Menge von 5 bis 13 Gew.-% der ungerösteten Popcornkerne vorliegt; und
(b) der von NaCl verschiedene, nicht fixierte Geschmacksstoff in einer Menge von 5 bis 10 Gew.-% der ungerösteten Popcornkerne vorliegt.

25. Mikrowellentaugliches Popcornprodukt, das folgendes aufweist:
(a) einen Behälter, der für ein Röstverfahren von Popcorn mit Mikrowellen geeignet ist; und
(b) eine mikrowellentaugliche Popcornzusammensetzung, die sich in dem Behälter befindet und folgendes aufweist:
(i) ungeröstete Popcornkerne, die jeweils eine Außenseite aufweisen;
(ii) einen von NaCl verschiedenen, fixierten Geschmacksstoff, der durch einen Gummi oder Stärke an der Außenseite der Kerne haftet;
(iii) eine Öl/Fett-Verteilungskomponente; und
(iv) einen von NaCl verschiedenen, nicht fixierten Geschmacksstoff, der in der Öl/Fett-Verteilungskomponente vorliegt.

26. Produkt nach Anspruch 25, das ferner folgendes aufweist:
(a) einen NaCl-Geschmacksstoff, der entweder als fixierter Geschmacksstoff oder als nicht fixierter Geschmacksstoff vorliegt.

27. Produkt nach Anspruch 25, wobei:
(a) der Behälter eine zweilagige Beutelkonstruktion mit einem gegenüber Mikrowellen interaktiven Aufbau ist, der sich zwischen einer inneren Lage und einer äußeren Lage befindet.

28. Produkt nach Anspruch 25, wobei:
(a) der Behälter ein Schlauch aus Behälterpappe ist.

## Revendications

1. Composition de pop corn micro-ondable non éclaté, comprenant :
(a) des grains de pop corn non éclatés, ayant chacun une surface externe ;
(b) un agent aromatisant fixé ayant adhéré sur les surfaces externes des grains par le biais d'une gomme ou d'amidon ;
(c) un composant de distribution huile/graisse ; et
(d) un agent aromatisant non fixé, à l'intérieur du composant de distribution huile/graisse.

2. Composition selon la revendication 1, dans laquelle :
(a) le composant de distribution huile/graisse est présent à un taux d'au moins 1 % en poids de la composition de pop corn.

3. Composition selon la revendication 2, dans laquelle :
(a) le composant de distribution huile/graisse est présent à un taux de pas plus de 50 % en poids de la composition de pop corn.

4. Composition selon la revendication 3, dans laquelle :
(a) le composant de distribution huile/graisse est présent à un taux d'au moins 25 % en poids de la composition de pop corn.

5. Composition selon la revendication 3, dans laquelle :
(a) le composant de distribution huile/graisse est présent à un taux de pas plus de 20 % en poids de la composition de pop corn.

6. Composition selon la revendication 3, dans laquelle :
(a) le composant de distribution huile/graisse est présent à un taux de pas plus de 5 % en poids de la composition de pop corn.

7. Composition selon la revendication 1, dans laquelle :
(a) la gomme ou l'amidon est présent à un taux de 1 à 5 % en poids des grains.

8. Composition selon la revendication 1, dans laquelle :
(a) la gomme est une gomme de qualité alimentaire ou l'amidon est un amidon hydraté.

9. Composition selon la revendication 1, dans laquelle :
(a) l'agent aromatisant fixé comprend un agent aromatisant fixé exempt de NaCl ; et
(b) l'agent aromatisant non fixé comprend un agent aromatisant non fixé exempt de NaCl.

10. Composition selon la revendication 9, dans laquelle :
(a) l'agent aromatisant fixé comprend un agent aromatisant fixé comprenant du NaCl.

11. Composition selon la revendication 9, dans laquelle :
(a) l'agent aromatisant non fixé comprend un agent aromatisant non fixé comprenant du NaCl.

12. Composition selon la revendication 9, dans laquelle :
(a) l'agent aromatisant fixé exempt de NaCl comprend au moins une substance aromatisante choisie dans le groupe constitué par un agent aromatisant beurre, un agent aromatisant fromage, un agent aromatisant pizza, un agent aromatisant barbecue, un agent aromatisant « aile de poulet à la mode de Buffalo », un agent aromatisant pepperoni, et des mélanges de ceux-ci ; et
(b) l'agent aromatisant non fixé exempt de NaCl comprend au moins une substance aromatisante choisie dans le groupe constitué par un agent aromatisant beurre, un agent aromatisant fromage, un agent aromatisant pizza, un agent aromatisant barbecue, un agent aromatisant « aile de poulet à la mode de Buffalo », un agent aromatisant pepperoni, et des mélanges de ceux-ci.

13. Composition selon la revendication 12, dans laquelle :
(a) un rapport en poids entre l'agent aromatisant fixé exempt de NaCl et les grains de pop corn non éclatés est de 0,01 à 0,15.

14. Composition selon la revendication 12, dans laquelle :
(a) un rapport en poids entre l'agent aromatisant non fixé exempt de NaCl et les grains de pop corn non éclatés est de 0,005 à 0,1.

15. Composition selon la revendication 12, dans laquelle :
(a) un rapport en poids entre l'agent aromatisant fixé exempt de NaCl et l'agent aromatisant non fixé exempt de NaCl est de 0,2 à 5.

16. Composition selon la revendication 12, dans laquelle :
(a) l'agent aromatisant fixé exempt de NaCl est présent à un taux d'au moins 0,5% en poids et pas supérieur à 15 % en poids de la composition totale.

17. Composition selon la revendication 12, dans laquelle :
(a) l'agent aromatisant non fixé exempt de NaCl est présent à un taux d'au moins 0,2 % en poids et pas supérieur à 15 % en poids de la composition totale.

18. Composition selon la revendication 1, dans laquelle :
(a) l'agent aromatisant fixé comprend au moins une substance aromatisante choisie dans le groupe constitué par le sel, un agent aromatisant beurre, un agent aromatisant fromage, un agent aromatisant pizza, un agent aromatisant barbecue, un agent aromatisant « aile de poulet à la mode de Buffalo », un agent aromatisant pepperoni, et des mélanges de ceux-ci ; et
(b) l'agent aromatisant non fixé comprend au moins une substance aromatisante choisie dans le groupe constitué par le sel, un agent aromatisant beurre, un agent aromatisant fromage, un agent aromatisant pizza, un agent aromatisant barbecue, un agent aromatisant « aile de poulet à la mode de Buffalo », un agent aromatisant pepperoni, un agent aromatisant ail et des mélanges de ceux-ci.

19. Composition selon la revendication 18, dans laquelle :
(a) un rapport en poids entre l'agent aromatisant fixé et les grains de pop corn non éclatés est de 0,01 à 0,15.

20. Composition selon la revendication 18, dans laquelle :
(a) un rapport en poids entre l'agent aromatisant non fixé et les grains de pop corn non éclatés est de 0,01 à 0,15.

21. Composition selon la revendication 18, dans laquelle :
(a) un rapport en poids entre l'agent aromatisant fixé et l'agent aromatisant non fixé est de 0,2 à 5.

22. Composition de pop corn micro-ondable non éclatés selon la revendication 1, comprenant :
(a) des grains de pop corn non éclaté, ayant chacun une surface externe ;
(b) un agent aromatisant fixé exempt de NaCl sur les surfaces externes des grains avec une gomme ou un amidon à un taux d'au moins 1 % en poids des grains de pop corn non éclatés ; et
(c) un composant de distribution huile/graisse, un agent aromatisant non fixé exempt de NaCl distribué à l'intérieur du composant de distribution huile/graisse, l'agent aromatisant non fixé exempt de NaCl étant à un taux d'au moins 0,5 % en poids des grains de pop corn non éclatés.

23. Composition selon la revendication 22, dans laquelle :
(a) l'agent aromatisant fixé exempt de NaCl sur la surface externe des grains est à un taux de 1 à 15 % en poids des grains de pop corn non éclatés ; et
(b) l'agent aromatisant non fixé exempt de NaCl est à un taux de 1 à 15 % en poids des grains de pop corn non éclatés.

24. Composition selon la revendication 23, dans laquelle :
(a) l'agent aromatisant fixé exempt de NaCl sur la surface externe des grains est à un taux de 5 à 13 % en poids des grains de pop corn non éclatés ; et
(b) l'agent aromatisant non fixé exempt de NaCl est à un taux de 5 à 10 % en poids des grains de pop corn non éclaté.

25. Produit de pop corn micro-ondable, comprenant :
(a) un conteneur approprié à l'utilisation dans un procédé d'éclatement du pop corn au rnicro-onde ; et
(b) une composition de pop corn micro-ondable placée à l'intérieur du conteneur et comprenant :
(i) des grains de pop corn non éclatés, ayant chacun une surface externe ;
(ii) un agent aromatisant fixé exempt de NaCl ayant adhéré sur les surfaces externes des grains par le biais d'une gomme ou d'amidon ;
(iii) un composant de distribution huile/graisse ; et
(iv) un agent aromatisant non fixé exempt de NaCl à l'intérieur du composant de distribution huile/graisse.

26. Produit selon la revendication 25, comprenant en outre :
(a) un agent aromatisant comprenant du NaCl, présent soit sous forme d'agent aromatisant fixé soit d'agent aromatisant non fixé.

27. Produit selon la revendication 25, dans lequel :
(a) le conteneur est une construction de sac à deux pliures avec une construction interactive avec le micro-onde placée entre un pli interne et un pli externe.

28. Produit selon la revendication 25, dans lequel :
(a) le conteneur est un tube en carton fibreux.
